(19) Europäisches Patentamt
European Patent Office
Office européen des brevets

(11) **EP 1 281 938 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(51) Int Cl.:
*G01F 1/84* *(2006.01)*  *G01F 1/86* *(2006.01)*

(21) Anmeldenummer: **02020874.0**

(22) Anmeldetag: **26.11.1999**

(54) **CORIOLIS MASSEDURCHFLUSS-/DICHTEMESSER**

CORIOLIS-TYPE MASS FLOWMETER/DENSIMETER

DEBITMETRE MASSIQUE DE CORIOLIS DENSIMETRE/DEBITMETRE-MASSE A FORCE DE CORIOLIS

(84) Benannte Vertragsstaaten:
**AT BE CH CY DE DK ES FI FR GB GR IE IT LI LU MC NL PT SE**

(30) Priorität: **11.12.1998 EP 98123680**
**19.02.1999 US 120797 P**

(43) Veröffentlichungstag der Anmeldung:
**05.02.2003 Patentblatt 2003/06**

(62) Dokumentnummer(n) der früheren Anmeldung(en) nach Art. 76 EPÜ:
**99961009.0 / 1 055 102**

(73) Patentinhaber: **Endress + Hauser Flowtec AG**
**4153 Reinach BL 1 (CH)**

(72) Erfinder:
• **Eckert, Gerhard**
**79618 Rheinfelden (DE)**

• **Häberli, Roman, Dr.**
**4566 Halten (SO) (CH)**
• **Matt, Christian**
**4147 Aesch, BL (CH)**
• **Wenger, Alfred, Dr.**
**8413 Neftenbach (CH)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 375 300    US-A- 4 768 384**
**US-A- 4 876 879    US-A- 5 736 653**

**Beschreibung**

Die Erfindung betrifft einen Coriolis-Massedurchfluß-/ Dichtemesser für ein in einer Rohrleitung strömendes Medium sowie ein Verfahren zum Erzeugen eines einen Massedurchfluß repräsentierenden Meßwerts.

Bei Coriolis-Massedurchfluß-/Dichtemessern für ein in einer Rohrleitung strömendes Medium beruht die Messung des Massedurchflusses bekanntlich darauf, daß ein Medium durch mindestens ein in die Rohrleitung eingefügtes und im Betrieb schwingendes Meßrohr strömt, wodurch das Medium Corioliskräfte erfährt. Diese bewirken, daß einlaßseitige und auslaßseitige Bereiche des Meßrohrs zueinander phasenverschoben schwingen. Die Größe dieser Phasenverschiebungen ist ein Maß für den Massedurchfluß. Die Schwingungen des Meßrohrs werden daher mittels zweier entlang des Meßrohres voneinander beabstandeter Schwingungssensoren erfaßt und in Meßsignale gewandelt, aus deren gegenseitiger Phasenverschiebung der Massedurchfluß abgleitet wird.

In der US-A 41 87 721 ist ein Coriolis-Massedurchflußmesser für ein in einer Rohrleitung strömendes Medium beschrieben, der umfaßt:

- ein einziges U-förmig gebogenens Meßrohr, das im Betrieb vom Medium durchströmt ist,
- ein Trägermittel, das an einem einlaßseitigen Ende und an einem auslaßseitigen Ende des Meßrohrs fixiert ist und dieses somit schwingfähig einspannt,
- eine Erregeranordnung, die das Meßrohr im Betrieb in Schwingungen versetzt,
- ein erstes Meßmittel zum Messen der Schwingungen, das

  -- einlaßseitig am Meßrohr angeordnet ist und
  -- ein erstes Meßsignal liefert,

- ein zweites Meßmittel zum Messen der Schwingungen, das

  -- auslaßseitig am Meßrohr angeordnet ist und
  -- ein zweites Meßsignal liefert, und

- eine Auswerte-Elektronik,

  -- die einen vom ersten und vom zweiten Meßsignal abgeleiteten, einen Massedurchfluß repräsentierenden Meßwert liefert.

Ferner ist in der EP-A 849 568, in der EP-A 375 300 sowie in der US-A 57 36 653 jeweils ein Coriolis-Massedurchflußmesser für ein in einer Rohrleitung strömendes Medium beschrieben, der umfaßt:

- ein einziges gerades Meßrohr, das im Betrieb vom Medium durchströmt ist,
- ein Trägermittel, das an einem einlaßseitigen Ende und einem auslaßseitigen Ende des Meßrohrs fixiert ist und dieses somit schwingfähig einspannt,
- eine Erregeranordnung, die das Meßrohr im Betrieb in Schwingungen versetzt,
- ein erstes Meßmittel zum Messen der Schwingungen, das

  -- einlaßseitig am Meßrohr angeordnet ist und
  -- ein erstes Meßsignal liefert,

- ein zweites Meßmittel zum Messen der Schwingungen, das

  -- auslaßseitig am Meßrohr angeordnet ist und
  -- ein zweites Meßsignal liefert, und

- eine Auswerte-Elektronik,

  -- die einen vom ersten und vom zweiten Meßsignal abgeleiteten, einen Massedurchfluß repräsentierenden Meßwert liefert.

Des weiteren ist in den US-A 46 60 421 und US-A 47 33 569 jeweils ein Coriolis-Massedurchflußmesser für ein in einer Rohrleitung strömendes Medium beschrieben, der umfaßt:

- ein schraubenförmig gebogenes Meßrohr, das im Betrieb vom Medium durchströmt ist,
- ein Trägermittel, das an einem einlaßseitigen Ende und einem auslaßseitigen Ende des Meßrohrs fixiert ist und dieses somit schwingfähig einspannt,
- eine Erregeranordnung, die das Meßrohr im Betrieb in Schwingungen versetzt,
- ein erstes Meßmittel zum Messen der Schwingungen, das

  -- einlaßseitig am Meßrohr angeordnet ist und
  -- ein erstes Meßsignal liefert,

- ein zweites Meßmittel zum Messen der Schwingungen, das

  -- auslaßseitig am Meßrohr angeordnet ist und
  -- ein zweites Meßsignal liefert, und

- eine Auswerte-Elektronik,

  -- die einen vom ersten und vom zweiten Meßsignal abgeleiteten, einen Massedurchfluß repräsentierenden Meßwert liefert.

Ferner ist in der US-A 48 76 879, in der US-A 47 68 389, in der DE-A 35 05 166, in der US-A 44 91 025, in der US-A 46 60 421 sowie in der US-A 52 18 873 jeweils ein Coriolis-Massedurchflußmesser für ein in einer Rohrleitung strömendes Medium mit zwei kommunizierenden Meßrohren beschrieben, die im Betrieb vom Medium durchströmt sind. Diese Meßrohre sind mittels eines einlaßseitigen ersten Verteilerstücks mit einem einlaßseitigen ersten Ende und mittels eines auslaßseitigen zweiten Verteilerstücks auslaßseitigen zweiten Ende miteinander verbunden und in einem Trägermittel schwingfähig eingespannt.

Schon die eingangs referierte US-A 41 87 721 - wie auch die EP-A 849 568 - erwähnen, daß mit Coriolis-Massedurchflußmessern immer auch die momentane Dichte des strömenden Mediums meßbar ist. Für die Erfindung wird daher vorausgesetzt, daß die oben nur als Coriolis-Massedurchflußmesser referierten Geräte auch die momentane Dichte messen, obwohl dies, da selbstverständlich, von den einzelnen Dokumenten nicht immer beschrieben wird.

Bei Coriolis-Massedurchflußmessern bzw. Coriolis-Massedurchfluß/Dichtemessern ist das Verhältnis D/L der Weite D des Meßrohr zu dessen Länge L für die Meßgenauigkeit von Bedeutung, wobei die Weite D bei Verwendung eines einzigen Meßrohrs praktisch gleich der Nennweite der angeschlossenen Rohrleitung ist.

Bei einem Verhältnis D/L von größer als etwa 0,05 kann das momentane Geschwindigkeitsfeld des Mediums im Meßrohr die Genauigkeit des Meßergebnisses so beeinträchtigen, daß der daraus resultierende erhöhte Meßfehler ggf. nicht mehr vernachlässigbar klein ist. Messungen haben ergeben, daß bei Verhältnissen D/L größer als 0,05 dieser Einfluß des Geschwindigkeitsfelds einen zusätzlichen Meßfehler von einigen Promille bis zu einem Prozent bewirken kann.

Der Minimierung des Verhältnisses D/L sind jedoch konstruktionsbedingte Grenzen gesetzt, nämlich einerseits wegen der in einem konkreten Anwendungsfall fest vorgegebenen Nennweite der Rohrleitung und andererseits wegen der Forderung nach möglichst kurzen und kompakten Geräten.

Eine Aufgabe der Erfindung ist es, einen Coriolis-Massedurchfluß/Dichtemesser anzugeben, der bei möglichst kompakter Bauweise hochgenaue Meßergebnisse liefert, unabhängig vom momentanen Geschwindigkeitsfeld. Eine weitere Aufgabe besteht darin, ein entsprechendes Verfahren für die Erzeugung des Meßergebnisses anzugeben.

Zur Lösung dieser Aufgabe besteht die Erfindung in einem Coriolis-Massedurchfluß-/ Dichtemesser für ein in einer Rohrleitung strömendes Medium, der umfaßt:

- mindestens ein Meßrohr, das im Betrieb vom Medium durchströmt ist,
- ein Trägermittel, das an einem einlaßseitigen Ende und einem auslaßseitigen Ende des Meßrohrs fixiert ist und dieses somit schwingfähig einspannt,
- eine Erregeranordnung, die das Meßrohr im Betrieb in Schwingungen versetzt,
- ein erstes Meßmittel zum Messen der Schwingungen, das

  -- einlaßseitig am Meßrohr angeordnet ist und
  -- ein erstes Meßsignal liefert,

- ein zweites Meßmittel zum Messen der Schwingungen, das

  -- auslaßseitig am Meßrohr angeordnet ist und

-- ein zweites Meßsignal liefert,

- ein drittes Meßmittel,

-- das ein die momentane Reynolds-Zahl des strömenden Mediums repräsentierendes drittes Meßsignal liefert, und

- eine Auswerte-Elektronik,

-- die einen vom ersten, vom zweiten und vom dritten Meßsignal abgeleiteten, einen Massedurchfluß repräsentierenden ersten Meßwert sowie
-- einen vom ersten und vom zweiten Meßsignal abgeleiteten, eine momentane Dichte des Mediums repräsentierenden zweiten Meßwert liefert.

Ferner besteht die Erfindung in einem Verfahren zum Erzeugen eines einen Massedurchfluß repräsentierenden ersten Meßwerts mittels eines Coriolis-Massedurchfluß-/ Dichtemesser für ein in einer Rohrleitung strömendes Medium, der umfaßt:

- mindestens ein Meßrohr, das im Betrieb vom Medium durchströmt ist,
- ein Trägermittel, das an einem einlaßseitigen Ende und einem auslaßseitigen Ende des Meßrohrs fixiert ist und dieses somit schwingfähig einspannt, und
- eine Erregeranordnung, die das Meßrohr im Betrieb in Schwingungen versetzt, und

welches Verfahren folgende Schritte umfaßt:

- Erfassen der Schwingungen des Meßrohrs und Erzeugen eines einlaßseitige Schwingungen repräsentierenden ersten Meßsignals und eines auslaßseitige Schwingungen repräsentierenden zweiten Meßsignals zum Entwickeln eines einen unkorrigierten Massedurchfluß repräsentierenden Zwischenwertes,
- Erzeugen eines eine momentane Reynolds-Zahl des strömenden Mediums repräsentierenden dritten Meßsignals mittels des Zwischenwertes und mittels eines eine dynamische Viskosität des Mediums repräsentierenden vierten Meßsignals sowie
- Korrigieren des Zwischenwertes mittels eines vom dritten Meßsignal abgeleiteten Korrekturwertes.

Nach einer ersten Ausgestaltung der Erfindung liefert die Auswerte-Elektronik einen vom dritten Meßsignal abgeleiteten Korrekturwert.

Nach einer zweiten Ausgestaltung der Erfindung liefert die Auswerte-Elektronik den Korrekturwert mittels eines durch Kalibrierung ermittelten konstanten Korrekturwerts für laminare Strömung, mittels eines durch Kalibrierung ermittelten konstanten Korrekturwerts für turbulente Strömung und mittels eines nach einer zwischen den beiden konstanten Korrekturwerten liegenden Interpolations- Funktion ermittelten interpolierten Korrekturwerts.

Nach einer dritten Ausgestaltung der Erfindung weist die Auswerte-Elektronik einen Tabellenspeicher auf, in dem von der Reynolds-Zahl abhängige digitalisierte Korrekturwerte abgelegt sind, und der mittels einer aufgrund des dritten Meßsignals gebildeten digitalen Speicherzugriffsadresse den Korrekturwert liefert.

Nach einer vierten Ausgestaltung der Erfindung liefert die Auswerte-Elektronik einen vom ersten und vom zweiten Meßsignal abgeleiteten, einen unkorrigierten Massedurchfluß repräsentierenden Zwischenwert.

Nach einer fünften Ausgestaltung der Erfindung liefert die Auswerte-Elektronik den ersten Meßwert aufgrund des Zwischenwerts und des Korrekturwerts.

Nach einer sechsten Ausgestaltung der Erfindung umfaßt der Coriolis-Massedurchfluß-/Dichtemesser ein viertes Meßmittel, das eine dynamische Viskosität des Mediums erfaßt und ein diese repräsentierendes viertes Meßsignal liefert.

Nach einer siebenten Ausgestaltung der Erfindung liefert das dritte Meßmittel das dritte Meßsignal aufgrund des unkorrigierten Zwischenwerts und des vierten Meßsignals.

Nach einer achten Ausgestaltung der Erfindung erfaßt das vierte Meßmittel eine kinematische Viskosität des Mediums und liefert ein diese repräsentierendes fünftes Meßsignal.

Nach einer neunten Ausgestaltung der Erfindung liefert das vierte Meßmittel das vierte Meßsignal aufgrund des zweiten Meßwert und des fünften Meßsignal.

Nach einer zehnten Ausgestaltung der Erfindung weist die Erregeranordnung eine Spule auf, die mit einer Erregerenergie gespeist ist und von deren Strom und/oder von deren Spannung leitet das vierte Meßmittel das vierte bzw. das fünfte Meßsignal ab.

Nach einer elften Ausgestaltung der Erfindung leitet das vierte Meßmittel das vierte bzw. das fünfte Meßsignal von einer entlang der Rohrleitung gemessenen Druckdifferenz ab.

Nach einer ersten Ausgestaltung des Verfahrens der Erfindung, wird das vierte Meßsignal von einem Strom und/oder von einer Spannung einer in die Erregeranordnung eingespeisten Erregerenergie abgeleitet.

Nach einer zweiten Ausgestaltung des Verfahrens der Erfindung, wird das vierte Meßsignal von einer entlang der Rohrleitung gemessenen Druckdifferenz abgeleitet.

Ein Vorteil der Erfindung besteht darin, daß der Coriolis-Massedurchfluß-/Dichtemesser auch bei einem Verhältnis D/L größer 0,05 einen Massedurchflußwert liefert, bei dem der Einfluß des momentanen Geschwindigkeitsfelds auf die Meßgenauigkeit kompensiert ist.

Die Erfindung wird nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.

Fig. 1      zeigt schematisch einen Massedurchflußaufnehmer eines Coriolis-Massedurchfluß-/Dichtemessers in einer vertikal teilweise geschnittenen Längsansicht;

Fig. 2      zeigt schematisch nach Art eines Blockschaltbildes Teilschaltungen der Auswerteelktronik des Coriolis-Massedurchfluß-/Dichtemessers, die der Erhöhung der Meßgenauigkeit des ermittelten Massedurchflusses dienen;

Fig. 3      zeigt schematisch nach Art eines Blockschaltbildes eine Teilschaltung, die dazu dient, aus einem unkorrigiert ermittelten Meßwert für den Massedurchfluß mittels eines Korrekturwerts einen korrigierten Meßwert für den Massedurchfluß zu erzeugen;

Fig. 4      zeigt schematisch nach Art eines Blockschaltbildes eine Teilschaltung, die aus einer gemessenen Reynolds-Zahl des Mediums einen Korrekturwert für den Massedurchfluß erzeugt;

Fig. 5      zeigt schematisch nach Art eines Blockschaltbildes eine Teilschaltung, die einen Korrekturwert für den Massedurchfluß nach einer Interpolations-Funktion erzeugt;

Fig. 6a      zeigt schematisch nach Art eines Blockschaltbildes eine Teilschaltung, die aus einer gemessenen dynamischen Viskosität des Mediums die Reynolds-Zahl bestimmt;

Fig. 6b      zeigt schematisch nach Art eines Blockschaltbildes Teilschaltung, die aus einer gemessenen kinematischen Viskosität des Mediums die Reynolds-Zahl bestimmt;

Fig. 7      zeigt schematisch nach Art eines Blockschaltbildes eine Teilschaltung, die aus einer gemessenen Erregungsenergie der Erregeranordnung die kinematischen Viskosität des Mediums bestimmt;

Fig. 8a      zeigt schematisch nach Art eines Blockschaltbildes eine Teilschaltung, die aus einer in Strömungsrichtung gemessenen Druckdifferenz Meßwerte für die kinematische Viskosität bei laminarer Strömung erzeugt;

Fig. 8b      zeigt schematisch nach Art eines Blockschaltbildes eine Teilschaltung, die aus einer in Strömungsrichtung gemessenen Druckdifferenz Meßwerte für die kinematische Viskosität bei turbulenter Strömung erzeugt;

Fig. 9      zeigt schematisch nach Art eines Blockschaltbildes eine Teilschaltung, die die momentane kinematische Viskosität des Mediums bestimmt.

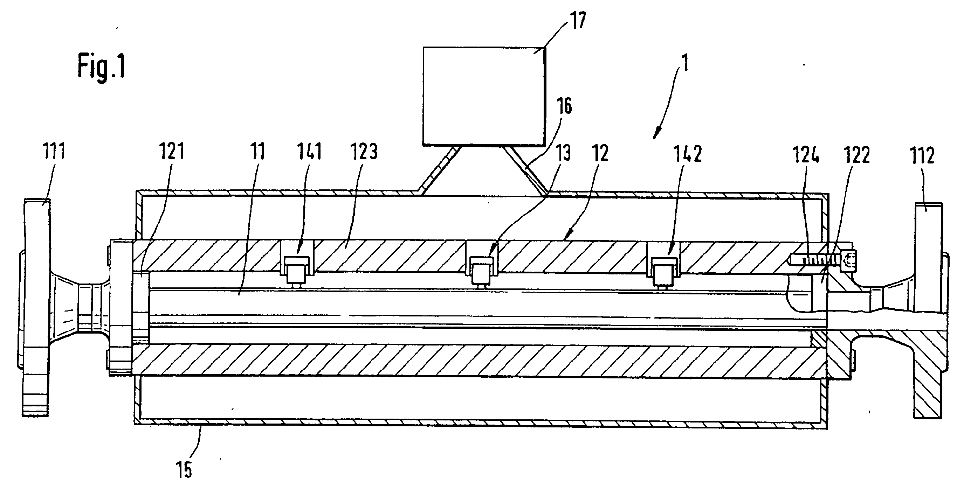

In Fig. 1 ist in einer vertikal teilweise geschnittenen Längsansicht ein Massedurchflußaufnehmer 1 eines Coriolis-Massedurchfluß/Dichtemessers mit einem einzigen geraden Meßrohr 11 dargestellt, das ein einlaßseitiges erstes Meßrohrende und ein auslaßseitiges zweites Meßrohrende aufweist.

Am ersten Meßrohrende ist ein erster Flansch 111 und am zweiten Meßrohrende ist ein zweiter Flansch 112 angebracht, mittels denen der Massedurchflußaufnehmer 1 in eine im Betrieb von einem Medium durchströmte, nicht dargestellte, Rohrleitung, insb. druckdicht, einfügt ist.

Der Massedurchflußaufnehmer 1 umfaßt weiterhin ein Trägermittel 12, mit einer am ersten Meßrohrende fixierten ersten Endplatte 121, mit einer am zweiten Meßrohrende fixierten zweite Endplatte 122 und mit einem zwischen die erste und die zweite Endplatte 121, 122 eingefügten Trägerrohr 123. Die beiden Endplatten 121, 122 sind mit dem Meßrohr 11 sowie mit dem Trägerrohr 123 starr und druckdicht, insb. vakuumdicht verbunden. Das Meßrohr 11 verläuft somit freitragend in einem Lumen des Trägerrohrs 123 zwischen den Endplatten 121, 122 und kann somit in Schwingungen versetzt werden.

Die Verbindungen des Meßrohrs 11 mit den Endplatten 121, 122 und mit den Flanschen 111, 112 bzw. die Verbindungen der Endplatten 121, 122 mit dem Trägerrohr 123 können z.B. Schweiß- oder Lötverbindungen sein; die Endplatten 121, 122 können am Trägerrohr 123 aber auch durch Schraubverbindungen, von denen eine Schraubverbindung 124 stellvertretend dargestellt ist, befestigt sein. Des weiteren ist es möglich die beiden Endplatten 121, 122 mit dem Trägerrohr 123 einstückig auszubilden.

Anstatt des in Fig. 1 dargestellten Massedurchflußaufnehmers 1 sind auch Massedurchflußaufnehmer mit zwei geraden Meßrohren üblich.

Anstelle gerader Meßrohre können aber auch alle anderen, bei Coriolis-Massedurchfluß-/ Dichtemessern beschriebenen Formen von Meßrohren verwendet werden, insb. U- oder omega-förmig ausladende oder schraubenförmig gebogene Meßrohre. Ferner sind auch mehrere, insb. zwei, hinsichtlich der Strömung des Mediums parallel- oder in Serie geschaltete Meßrohre verwendbar. Bei parallelgeschalteten Meßrohren weisen die Enden zusätzlich noch entsprechende Verteilerstücke auf, die der Aufteilung bzw. der Zusammenführung des strömenden Mediums dienen.

Medium kann jeder strömungsfähige Stoff sein, insb. Flüssigkeiten, Gase oder Dämpfe.

Die Meßrohre sind bevorzugt aus Titan, Zirkonium oder Edel-Stahl gefertigt.

In Fig. 1 ist weiterhin eine Erregeranordnung 13 gezeigt, die innerhalb des Trägermittels 12 zwischen Meßrohr 11 und Trägerrohr 123 bevorzugt in der Mitte zwischen der ersten und der zweiten Endplatte 121, 122 angebracht ist. Diese Erregeranordnung 13 versetzt das Meßrohr 11 im Betrieb in Schwingungen bei einer mechanischen Resonanzfrequenz, die wiederum ein Maß für die momentane Dichte des Mediums ist.

Die Erregeranordnung 13 kann z.B. eine Tauchanker-Spulenanordnung sein, die einen am Meßrohr 11 befestigten weichmagnetischen Spulenkern mit einem eingelagerten Dauermagneten und eine am Trägerrohr 123 befestigte, im Betrieb von einem zeitlich veränderlichen Erregerstrom durchflossene Spule umfaßt, wobei der Dauermagnet in die Spule eintaucht. Durch die Wirkung des zeitlich veränderlichen Erregerstroms wird der Dauermagnet bewegt und damit das Meßrohr 11 in Schwingungen versetzt, wobei der einlaßseitige Bereich und der auslaßseitige Bereich bei hindurchströmendem Medium zueinander phasenverschoben schwingen.

Als ein Beispiel für eine dem Antreiben der Erregeranordnung 13 dienende Erreger-Elektronik wird auf die US-A 48 01 897 hingewiesen.

Bei geraden Meßrohren sind die Schwingungen meist Biegeschwingungen, die den Schwingungen einer Saite vergleichbar sind. Diesen Biegeschwingungen können außerdem Torsionsschwingungen überlagert sein, vgl. EP-A 849 568. Neben den genannten Biege-/ Torsionsschwingungen sind jedoch auch Hoop-Mode-Schwingungen üblich, bei denen sich das Meßrohr peristaltisch bewegt, vgl.die US-A 49 49 583.

Bei U- oder omega-förmigen Meßrohren sind die Schwingungen Ausleger-Schwingungen, die denen einer Stimmgabel vergleichbar sind, vgl. US-A 41 87 721

Innerhalb des Trägermittels 12 sind zwischen Meßrohr 11 und Trägerrohr 123 entlang des Meßrohrs 11 voneinander beabstandet ein erstes Meßmittel 141 und ein zweites Meßmittel 142 zum Messen der Schwingungen angeordnet. Die Meßmittel 141, 142 sind bevorzugt von der Mitte des Meßrohrs 11 gleich weit entfernt angebracht und liefern ein erstes bzw. zweites die Schwingungen repräsentierendes Meßsignal $x_{s1}$, $x_{s2}$.

Die Meßmittel 141, 142 weisen dazu Schwingungsaufnehmer auf, die gemäß der US-A 57 36 653 bevorzugt als elektrodynamische Schwingungsaufnehmer ausgeführt sind; sie können aber auch als optische Schwingungsaufnehmer ausgeführt sein, vgl. die US-A 48 01 897.

Der Massedurchflußaufnehmer 1 ist gegenüber Umgebungseinflüssen durch ein Aufnehmer-Gehäuse 15 geschützt. Dieses ist so ausgeführt, daß sowohl das Trägermittel 12 als auch alle am Massedurchflußaufnehmer 1 angeschlossenen elektrischen Verbindungsleitungen darin untergebracht sind; letztere sind aus Gründen der Übersichtlichkeit nicht dargestellt.

Das Aufnehmer-Gehäuse 15 ist mit einem halsartigen Übergangsstück 16 versehen, an dem ein Elektronik-Gehäuse 17 fixiert ist.

Im Elektronik-Gehäuse 17 sind sowohl die bereits erwähnte Erreger-Elektronik als auch eine Auswerte-Elektronik 2 sowie weitere, dem Betreiben des Coriolis-Massedurchfluß-/ Dichtemessers dienende Schaltungsanordnungen, untergebracht. Derartige Schaltungsanordnungen können z.B. eine von einer externen Energiequelle gespeiste Versorgungs-Elektronik zur internen Energieversorgung des Coriolis-Massedurchfluß-/ Dichtemessers und/oder eine Kommunikations-Elektronik zur Übertragung von Daten, z.B. Meß- und/oder Gerätedaten, zwischen dem Coriolis-Massedurchfluß-/ Dichtemesser und einer externen Signalverarbeitungseinheit sein.

Bei einer ggf. ungünstigen Beeinflussung des Schwingungsverhaltens des Massedurchflußaufnehmers 1 durch das Elektronik-Gehäuse 17, kann dieses auch getrennt vom Massedurchflußaufnehmer 1 angeordnet werden. Dann besteht lediglich eine elektrische Verbindungleitung zwischen Elektronik-Gehäuse 17 und Massedurchflußaufnehmer 1, so daß beide praktisch voneinander vibrations-entkoppelt sind.

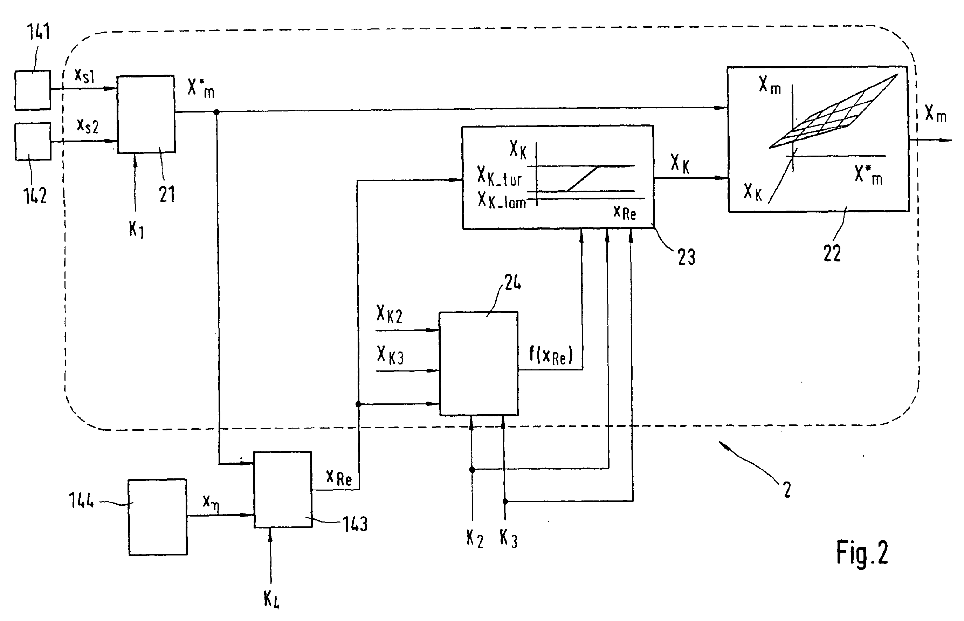

In Fig. 2 sind nach Art eines Blockschaltbildes Teilschaltungen der Auswerte-Elektronik 2 des Coriolis-Massedurchfluß-/Dichtemessers dargestellt, die der Erzeugung eines den Massedurchfluß repräsentierenden ersten Meßwerts $X_m$ dienen.

Gemäß Fig. 2 sind die Meßsignale $x_{s1}$, $x_{s2}$ einer Meßschaltung 21 der Auswerte-Elektronik 2 zugeführt. Als Meßschaltung 21 kann z.B. die in der US-A 56 48 616 beschriebene Auswerte-Elektronik eines Coriolis-Massedurchfluß-/ Dichtemessers dienen, die z.B. unter Verwendung einer Erregerschaltung entsprechend der US-A 48 01 897 einen Massedurchflußwert ermittelt. Selbstverständlich können auch andere dem Fachmann bekannte Auswerte-Elektroniken für Coriolis-Massedurchfluß-/Dichtemesser verwendet werden.

Der von der Meßschaltung 21 ermittelte Massedurchflußwert ist jedoch bei großen Verhältnissen D/L noch nicht ausreichend genau und muß dementsprechend korrigiert werden; er wird daher im folgenden als Zwischenwert $X^*_m$ bezeichnet, aus dem wiederum der den Massedurchfluß ausreichend genau repräsentierender Meßwert $X_m$ abgleitet ist.

Die Korrektur des Zwischenwerts $X^*_m$ geht auf im folgenden beschriebene Erkenntnisse der Erfinder zurück.

Der Massedurchfluß im Meßrohr 11 ist durch nachstehende Gleichung gegeben:

$$\frac{dQ}{dt} = \frac{\pi}{4} \cdot D^2 \cdot \rho \cdot v_m \tag{1}$$

Darin sind:

| | |
|---|---|
| $dQ/dt$ | der Massedurchfluß, |
| $D$ | die Weite des Meßrohrs 11, |
| $\rho$ | die momentane Dichte des Mediums und |
| $v_m$ | die mittlere Geschwindigkeit des strömenden Mediums im Meßrohr 11. |

Die mittlere Geschwindigkeit $v_m$ ist die arithmetische Mittelung aller Geschwindigkeitsvektoren des strömenden Mediums über einer Querschnittsfläche des Meßrohrs 11.

Für den Zwischenwert $X^*_m$ eines Coriolis-Massedurchfluß-/ Dichtemessers gilt:

$$X^*_m = K_1 \cdot \frac{X_\varphi}{X_f} \tag{2}$$

Darin sind:

| | |
|---|---|
| $X_f$ | ein die momentane Frequenz der Schwingungen des Meßrohrs 11 repräsentierender Meßwert, |
| $X_\varphi$ | ein die momentane Phasenverschiebung zwischen dem ersten und dem zweiten Meßsignal $x_{s1}$, $x_{s2}$ repräsentierender Meßwert und |
| $K_1$ | ein erster Parameter des Coriolis-Massedurchfluß-/Dichtemessers. |

Der Parameter $K_1$ ist in erster Linie von der momentanen Temperatur des Mediums abhängig; er kann ferner auch noch von der momentanen Dichte des Mediums abhängig sein.

Für Gl.(2) wird vorausgesetzt, daß die den Parameter $K_1$ bestimmenden Eigenschaften des Mediums, nämlich die momentane Temperatur und die momentane Dichte,bekannt sind, da sie ebenfalls beim Betrieb von Coriolis-Massedurchfluß-/Dichtemessern gemessen werden, vgl. für die Messung der momentanen Temperatur die US-A 47 68 384 und für die Messung der momentanen Dichte die US-A 41 87 721.

Für Gl.(2) wird weiterhin angenommen, daß die durch die Coriolis-Kräfte verursachte Phasenverschiebung zwischen einer einlaßseitig erfaßten und einer auslaßseitig erfaßten Schwingung des Meßrohrs 11 proportional zum momentanen Massedurchfluß ist. Diese Annahme setzt voraus, daß alle im Meßrohr 11 auftretenden Geschwindigkeitsfelder bei gleichem momentanen Massedurchfluß gleiche Coriolis-Kräfte bewirken. Dies trifft umso genauer zu, je kleiner das Verhältnis D/L ist, da in diesem Fall alle Geschwindigkeitsfelder einander gleich oder zumindest sehr ähnlich sind. Bei großen Verhältnissen D/L, insb. größer 0,05, trifft diese Annahme immer schlechter zu und führt zu einem Zwischenwert $X^*_m$, der eine immer geringer werdende Meßgenauigkeit aufweist.

Untersuchungen haben ergeben, daß der Wert der entsprechenden Meßungenauigkeit insb. davon abhängt, ob die Strömung des Mediums laminar oder turbulent ist.

Somit kann zur Ermittlung des Meßwerts $X_m$ eine Korrektur des Zwischenwerts $X^*_m$ dadurch vorgenommen

werden, daß das Vorhandensein laminarer bzw. turbulenter Strömung im Meßrohr 11 ermittelt und in einem Korrekturwert $X_K$ für den Zwischenwert $X^*_m$ berücksichtigt wird. Durch eine entsprechende Modifizierung von Gl.(2) gilt für den Meßwert $X_m$:

$$X_m = (1 + X_K) \cdot K_1 \cdot \frac{X_\varphi}{X_f} = (1 + X_K) \cdot X'_m \qquad (3)$$

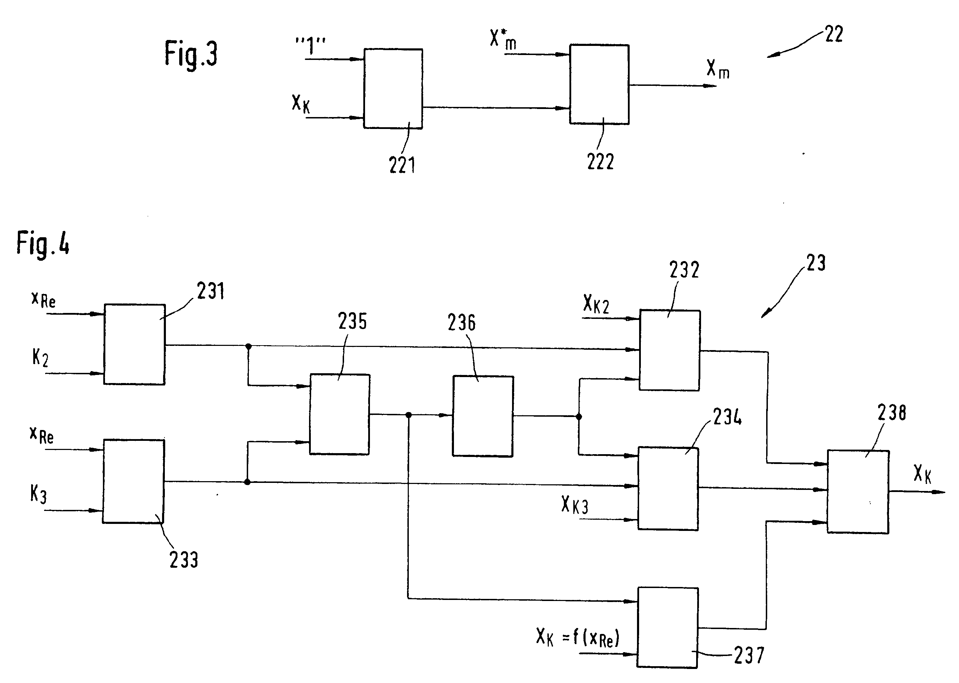

Die Gl.(3) ist mit einer zweiten Teilschaltung 22 der Auswerte-Elektronik 2 realisiert, die in Fig. 3 nach Art eines Blockschaltbildes dargestellt ist.

Die Teilschaltung 22 umfaßt einen ersten Addierer 221, mit dem ein erster Summen-Wert für $1+X_K$ aus dem Korrekturwert $X_K$ an einem ersten Eingang und aus einem Wert für eins an einem zweiten Eingang gebildet und an einem Ausgang ausgegeben wird.

Des weiteren umfaßt die zweite Teilschaltung 22 einen ersten Multiplizierer 222 mit einem ersten Eingang für den ersten Summen-Wert und einem zweiten Eingang für den Zwischenwert $X^*_m$. Der Multiplizierer 222 liefert an einem Ausgang einen ersten Produkt-Wert für $(1+X_K) \cdot X^*_m$, der dem Meßwert $X_m$ entspricht.

Der Korrekturwert $X_K$ wird bei der Erfindung aus der momentanen Reynolds-Zahl des Mediums abgeleitet, die eine das Geschwindigkeitsfeld des strömenden Mediums eindeutig beschreibende Größe ist. Dementsprechend weist der Massedurchflußaufnehmer 1 ein drittes Meßmittel 143 zum Messen der momentanen Reynolds-Zahl des Mediums auf, vgl. Fig. 2. Das Meßmittel 143 liefert ein die Reynolds-Zahl repräsentierendes drittes Meßsignal $x_{Re}$ und führt es der Auswerte-Elektronik 2 zu.

Die Werte des Meßsignal $x_{Re}$ sind bei laminarer Strömung kleiner als bei turbulenter. Für jede Weite D des Meßrohrs 11 und der zugehörigen Nennweite der bereits erwähnten Rohrleitung existieren somit ein oberer Grenzwert der Reynolds-Zahl für laminare und ein unterer Grenzwert der Reynolds-Zahl für turbulente Strömungen, welche beiden Grenzwerte nicht identisch sind. Diese beiden Grenzwerte werden während des Kalibrierens ermittelt.

Der beim Kalibrieren ermittelte obere Grenzwert der Reynolds-Zahl für laminare Strömung ist durch einen zweiten Parameter $K_2$ repräsentiert, der in der Auswerte-Elektronik 2 abgespeichert wird. Der beim Kalibrieren ermittelte untere Grenzwert der Reynolds-Zahl für turbulente Strömung ist durch einen dritten Parameter $K_3$ repräsentiert, der in der Auswerte-Elektronik 2 abgespeichert wird.

Ein Vergleich des Meßsignal $x_{Re}$ mit diesen beiden Parametern $K_2$, $K_3$ ergibt, ob laminare oder turbulente Strömung im Meßrohr 11 vorliegt, und liefert einen entsprechenden Korrekturwert $X_K$. Diesem Vergleich liegen folgende Ungleichungen zugrunde:

$$X_K = \begin{cases} X_{K2} & \text{für} \quad x_{Re} < K_2 \\ f(x_{Re}) & \text{für} \quad K_2 \leq x_{Re} \leq K_3 \\ X_{K3} & \text{für} \quad K_3 < x_{Re} \end{cases} \qquad (4)$$

Darin sind:

$X_{K2}$     ein durch die Kalibrierung ermittelter konstanter Korrekturwert für laminare Strömung,

$X_{K3}$     ein durch die Kalibrierung ermittelter konstanter Korrekturwert für turbulente Strömung und

$f(x_{Re})$     eine von $X_{K2}$ nach $X_{K3}$ monoton wachsende Interpolations-Funktion, deren Verlauf eingestellt werden kann, s.u..

Das Ergebnis des Vergleiches des Meßsignals $x_{Re}$ mit den beiden Parametern $K_2$, $K_3$ gemäß Gl.(4) ist ein Korrekturwert $X_K = X_{K2}$ für laminare Strömung, ein Korrekturwert $X_K = X_{K3}$ für turbulente Strömung oder ein der Interpolations-Funktion $f(x_{Re})$ entsprechender interpolierter Korrekturwert $X_K = f(x_{Re})$.

Die Gl.(4) ist mittels einer dritten Teilschaltung 23 realisiert, deren einzelne Funktionselemente in Fig. 4 nach Art eines Blockschaltbildes dargestellt sind.

Die Teilschaltung 23 umfaßt einen ersten Komparator 231 mit einem Referenz-Eingang für den Parameter $K_2$ und mit einem Signal-Eingang für das Meßsignal $x_{Re}$. Der Komparator 231 gibt einen binären ersten Vergleichs-Wert für $x_{Re} < K_2$ ab, der gleich eins ist, wenn ein momentaner Wert des Meßsignals $x_{Re}$ kleiner als der Wert des Parameters $K_2$ ist; anderenfalls ist der erste Vergleichs-Wert gleich null. Der erste Vergleichs-Wert ist einem ersten Eingang eines zweiten Multiplizierers 232 zugeführt. An einem zweiten Eingang dieses Multiplizierers 232 liegt der konstante Korrekturwert für laminare Strömung $X_{K2}$.

Weiterhin umfaßt die Teilschaltung 23 einen zweiten Komparator 233 mit einem Referenz-Eingang für den Parameter $K_3$ und mit einem Signal-Eingang für das Meßsignal $x_{Re}$. Der Komparator gibt an einem Ausgang einen binären zweiten Vergleichs-Wert für $x_{Re} > K_3$ ab, der gleich eins ist, wenn der momentane Wert des Meßsignals $x_{Re}$ größer als der Wert des Parameters $K_3$ ist; anderenfalls ist der zweite Vergleichs-Wert gleich null.

Der zweite Vergleichs-Wert ist einem ersten Eingang eines dritten Multiplizierers 234 zugeführt. An einem zweiten Eingang des Multiplizierers 234 liegt der konstante Korrekturwert für turbulente Strömung $X_{K3}$.

Ferner umfaßt die Teilschaltung 23 ein NOR-Gatter 235 mit einem ersten Eingang für den ersten und mit einem zweiten Eingang für den zweiten Vergleichs-Wert. Das NOR-Gatter 235 liefert einen binären dritten Vergleichs-Wert entsprechend $K_2 \leq x_{Re} \leq K_3$, der gleich eins ist, wenn der erste und der zweite Vergleichs-Wert gleich null sind; anderenfalls ist der dritte Vergleichs-Wert gleich null.

Mit einem dem NOR-Gatter 235 nachgeschalteten Inverter 236 wird aus dem dritten Vergleichs-Wert ein zu diesem invertierter vierter Vergleichs-Wert gebildet, der einem dritten Eingang des Multiplizierers 232 und einem dritten Eingang des Multiplizierers 234 zugeführt ist.

Somit liefert der Multiplizierer 232 einen zweiten Produkt-Wert, der gleich dem konstanten Korrekturwert $X_{K2}$ für laminare Strömung ist, wenn der erste und der vierte Vergleichs-Wert gleich eins sind; anderenfalls ist der zweite Produkt-Wert gleich null. Analog dazu liefert der Multiplizierer 234 einen dritten Produkt-Wert, der gleich dem konstanten Korrekturwert $X_{K3}$ für turbulente Strömung ist, wenn der zweite und der vierte Vergleichs-Wert gleich eins sind; anderenfalls ist der dritte Produkt-Wert gleich null.

Der der Interpolations-Funktion $f(x_{Re})$ entsprechenden interpolierte Korrekturwert, dessen Bildung weiter unten beschrieben wird, ist einem ersten Eingang eines vierten Multiplizierers 237 zugeführt. Der dritte Vergleichs-Wert liegt an einem zweiten Eingang des Multiplizierers 237, so daß dieser einen vierten Produkt-Wert abgibt, der gleich dem Korrekturwert $X_K$ ist, wenn der dritte Vergleichs-Wert gleich eins ist; ist der dritte Vergleichs-Wert gleich null, so ist der vierte Produkt-Wert ebenfalls gleich null.

Der zweite, der dritte bzw. der vierte Produkt-Wert sind einem ersten, zweiten bzw. einem dritten Eingang eines zweiten Addierers 238 zugeführt, der einen zweiten Summen-Wert liefert. Da gleichzeitig immer nur entweder der zweite oder der dritte oder der vierte Produkt-Wert ungleich null ist, entspricht der zweite Summen-Wert dem gesuchten Korrekturwert $X_K$.

Der Korrekturwert $X_K$ kann aber auch mittels einer in der Teilschaltung 23 vorgesehenen Fuzzy-Logic generiert werden. Dazu werden der Komparator 231 durch eine erste Zugehörigkeits-Funktion für laminare Strömung, der Komparator 233 durch eine zweite Zugehörigkeits-Funktion für turbulente Strömung und das NOR-Gatter 235 durch eine dritte Zugehörigkeits-Funktion für gleichzeitig vorliegende laminare und turbulente Strömung ersetzt. Diese Zugehörigkeits-Funktionen sind durch Kalibriermessungen zu ermitteln und liefern einen den ersten, den zweiten bzw. den dritten binären Vergleichs-Wert ersetzenden ersten, zweiten bzw. dritten Zugehörigkeits-Wert, die in einem Wertebereich zwischen null und eins liegen. Der Inverter 236 ist dabei z.B. durch einen Subtrahierer zu ersetzen, der dann vom Wert eins den dritten Zugehörigkeits-Wert abzieht.

Für Strömungsverhältnisse mit laminaren und mit turbulenten Anteilen wird nach Gl.(4) der Korrekturwert $X_K$ mittels der Interpolations-Funktion $f(x_{Re})$ interpoliert. Die Interpolations-Funktion $f(x_{Re})$ läßt sich in üblicher Weise als eine Potenzreihe entwickeln, z.B. mit dem Parameter $K_2$ als Entwicklungsstelle, so daß für $f(x_{Re})$ gilt:

$$f\left(x_{Re}\right) = \sum_{n=0}^{\infty} a_n\left(x_{Re} - K_2\right)^n = a_0 + a_1\left(x_{Re} - K_2\right) + a_2\left(x_{Re} - K_2\right)^2 \ldots \qquad (5)$$

Damit ist die Interpolations-Funktion $f(x_{Re})$ mittels eines Näherungspolynoms vom Grade *n* mit beliebiger Genauigkeit realisierbar. Die Koeffizienten $a_n$ der Interpolations-Funktion $f(x_{Re})$ sind durch Kalibrierung zu ermitteln.

Soll z.B. das Näherungspolynom nur ersten Grades sein, also *n* = 1 gelten, so ergibt sich für die entsprechende Interpolations-Funktion $f_1(x_{Re})$ ein linearer Zusammenhang:

$$f_1\left(x_{Re}\right) = a_0 + a_1\left(x_{Re} - K_2\right) \qquad (6)$$

Unter Berücksichtigung von Gl.(4) ergibt sich für Gl.(6):

$$f_1(x_{Re}) = X_{K2} + \frac{X_{K3} - X_{K2}}{K_3 - K_2}(x_{Re} - K_2) \tag{7}$$

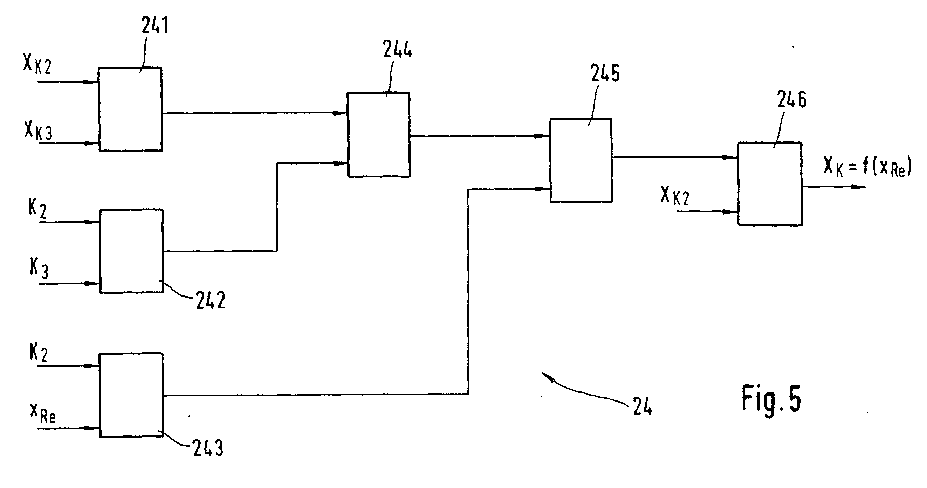

In Fig. 5 ist eine vierte Teilschaltung 24 nach Art eines Blockschaltbildes dargestellt, die die Interpolations-Funktion $f_1(x_{Re})$ gemäß Gl.(7) realisiert.

Die Teilschaltung 24 umfaßt einen ersten Subtrahierer 241 mit einem Subtrahend-Eingang für den Korrekturwert $X_{K2}$ für laminare Strömung und mit einem Minuend-Eingang für den Korrekturwert $X_{K3}$ für turbulente Strömung, der einen ersten Differenz-Wert für $X_{K3}$-$X_{K2}$ erzeugt. Ein zweiter Subtrahierer 242 mit einem Subtrahend-Eingang für den Parameter $K_2$ und einem Minuend-Eingang für den Parameter $K_3$ liefert einen zweiten Differenz-Wert für $K_3$-$K_2$. Weiterhin liefert ein dritter Subtrahierer 243 mit einem Subtrahend-Eingang für den Parameter $K_2$ und mit einem Minuend-Eingang für das Meßsignals $x_{Re}$ einen dritten Differenz-Wert für $x_{Re}$-$K_2$.

Ferner gehören zur Teilschaltung 24 ein erster Dividierer 244 mit einem Dividend-Eingang für den ersten Differenz-Wert und mit einem Divisor-Eingang für den zweiten Differenz-Wert. Der Dividierer 244 gibt einen ersten Quotient-Wert ab, der dem Ausdruck $(X_{K3}$-$X_{K2})/(K_3$-$K_2)$ entspricht.

Ein fünfter Multiplizierer 245 mit einem ersten Eingang für den ersten Quotient-Wert und mit einen zweiten Eingang für den dritten Differenz-Wert generiert einen fünften Produkt-Wert für $(x_{Re}$-$K_2)(X_{K3}$-$X_{K2})/(K_3$-$K_2)$, der wiederum einem ersten Eingang eines dritter Addierers 246 zugeführt ist. An einem zweiten Eingang des Addierers 246 liegt der Korrekturwert $X_{K2}$ für laminare Strömung, so daß der Addierer 246 einen dritten Summen-Wert für $X_{K2}$+$(x_{Re}$-$K_2)(X_{K3}$-$X_{K2})/(K_3$-$K_2)$ abgibt. Dieser dritte Summen-Wert entspricht für den Fall $K_2 \le x_{Re} \le K_3$, also bei Strömungsverhältnissen mit laminaren und mit turbulenten Anteilen, dem gesuchten Korrekturwert $X_K$.

Außer der Gl.(7) kann der Teilschaltung 24 selbstverständlich auch jedes andere, auf den Gln. (4) und (5) basierende Näherungspolynom zugrundegelegt werden.

Anstatt der in den Fig. 4 und Fig. 5 dargestellten Teilschaltungen 23 bzw. 24 kann die Auswerte-Elektronik 2 auch einen Tabellenspeicher enthalten, in dem diskrete Werte für den Korrekturwert $X_K$ abgelegt sind. Auf diese wird über eine aus dem Meßsignal $x_{Re}$ abgeleitete digitale Speicheradresse zugegriffen. Die Bildung dieser digitalen Speicheradresse erfolgt mittels eines Analog-Digital-Wandlers und eines diesem nachgeschalteten Codierers. Als Tabellenspeicher kann dabei ein programmierbarer Festwertspeicher, also ein EPROM oder ein EEPROM, dienen.

Zur nach Gl.(4) erforderlichen Messung der Reynolds-Zahl dienen folgende Beziehungen:

$$Re = \frac{\rho}{\eta} \cdot D \cdot v_m = \frac{1}{\zeta} \cdot D \cdot v_m \tag{8}$$

Darin sind:

$\eta$    die dynamische Viskosität des Mediums und
$\zeta$    die kinematische Viskosität des Mediums.

Die mittlere Geschwindigkeit $v_m$ nach Gl.(1) in Gl.(8) eingesetzt, ergibt für die Reynolds-Zahl:

$$Re = \frac{1}{\eta} \cdot \frac{4}{\pi \cdot D} \cdot \frac{dQ}{dt} = \frac{1}{\zeta \cdot \rho} \cdot \frac{4}{\pi \cdot D} \cdot \frac{dQ}{dt} \tag{9}$$

Nach der Erfindung wird gemäß Gl.(9) entweder die dynamische oder die kinematische Viskosität des Mediums zur Generierung des Meßsignals $x_{Re}$ und damit auch zur Bestimmung des Korrekturwertes $X_K$ verwendet, da sich beide Viskositäten unter Berücksichtigung der momentanen Dichte $\rho$ des Mediums ohne weiteres ineinander umrechnen lassen.

Durch Einsetzen der entsprechenden Meßsignale in Gl.(9) ergibt sich unter Verwendung der dynamischen Viskosität für das Meßsignal $x_{Re}$ folgende Beziehung:

$$x_{Re} = \frac{K_4}{x_\eta} \cdot X_m^* , \qquad (10)$$

Darin sind

$x_\eta$     ein die dynamische Viskosität des Mediums repräsentierendes viertes Meßsignal und
$K_4$     ein aus dem Quotient $4/\pi D$ abgeleiteter vierter Parameter.

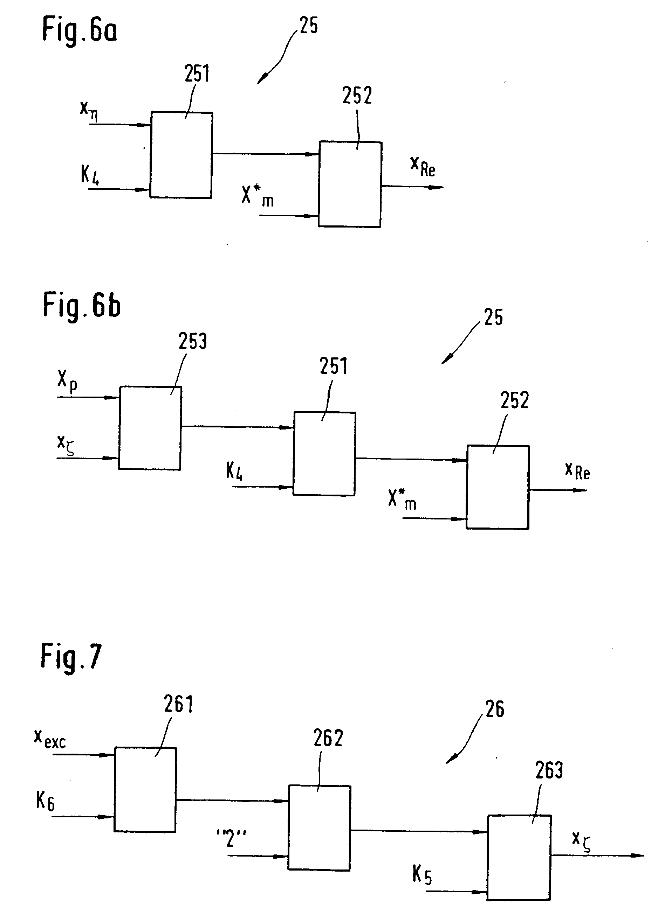

Die Gln. (10) ist im Meßmittel 143 durch eine fünfte Teilschaltung 25 realisiert, die nach Art eines Blockschaltbildes in Fig. 6a dargestellt ist.

Die Teilschaltung 25 umfaßt einen zweiten Dividierer 251 mit einem Dividend-Eingang für den Parameter $K_4$ und mit einem Divisor-Eingang für das Meßsignal $x_\eta$. Der Dividierer 251 liefert einen zweiten Quotienten-Wert für $K_4/x_\eta$, der einem ersten Eingang eines sechsten Multiplizierers 252 zugeführt ist. An einem zweiten Eingang des Multiplizierers 252 liegt der Zwischenwert $X_m^*$. Der Multiplizierer 252 liefert somit einen sechsten Produkt-Wert, der gemäß Gl.(10) dem Meßsignal $x_{Re}$ entspricht.

Das nach Gl.(10) zur Bestimmung des Meßsignals $x_{Re}$ erforderliche Meßsignal $x_\eta$ wird durch ein weiteres viertes Meßmittel 144 erzeugt, vgl. Fig. 2.

Zur Ermittlung der dynamischen Viskosität des Mediums können nach Gl.(8) die kinematische Viskosität und die momentane Dichte des Mediums dienen. Unter Berücksichtigung von Gl.(9) ergibt sich das Meßsignal $x_\eta$ dann wie folgt:

$$x_\eta = x_\zeta \cdot X_\rho \qquad (11)$$

Darin sind

$x_\zeta$     ein die kinematische Viskosität des Mediums repräsentierendes fünftes Meßsignal und
$X_\rho$     ein die momentane Dichte des Mediums repräsentierender zweiter Meßwert.

Nach einer weiteren Ausgestaltung der Erfindung gemäß Gl.(11) benutzt das Meßmittel 144 das die kinematische Viskosität des Mediums repräsentierende Meßsignal $x_\zeta$ zur Generierung des Meßsignal $x_\eta$. Dementsprechend weist die Teilschaltung 25, wie in Fig. 6b nach Art eines Blockschaltbildes dargestellt, einen siebenten Multiplizierer 253 mit einem ersten Eingang für das Meßsignal $x_\zeta$ und mit einem zweiten Eingang für den Meßwert $X_\rho$ auf. Der Multiplizierer 253 liefert als Produkt-Wert das Meßsignal $x_\eta$, das dem Divisor-Eingang des Dividierers 251 zugeführt ist. Der Meßwert $X_\rho$ ist z.B. aus der momentanen Schwingfrequenz des Meßrohrs 11 abgeleitet, vgl. die eingangs referierte US-A 41 87 721.

Die zur Generierung des Meßsignal $x_\zeta$ erforderlichen Maßnahmen werden nachfolgend erläutert. Da die Viskosität eine die innere Reibung des strömenden Mediums beschreibende Größe ist, ist eine Bestimmung der kinematischen Viskosität des Mediums nach Erkenntnissen der Erfinder dadurch möglich, daß die in die Erregeranordnung 13 eingespeiste Erregungsenergie gemessen wird. Aufgrund der inneren Reibung des Mediums werden nämlich die Schwingungen des durchströmten Meßrohrs 11 in Abhängigkeit von der Viskosität des Mediums, insb. der kinematischen Viskosität, im Vergleich zum leeren Meßrohr 11 zusätzlich bedämpft. Zur Aufrechterhaltung der Schwingungen des Meßrohrs 11 muß der durch die Reibung zusätzlich verursachte Energieverlust durch eine entsprechend erhöhte Erregungsenergie kompensiert werden.

Nach einer bevorzugten Ausgestaltung der Erfindung wird daher zur Ermittlung des Meßsignal $x_\zeta$ folgende, durch Messungen ermittelte Beziehung verwendet:

$$x_\zeta = K_5 \cdot \left( x_{exc} - K_6 \right)^2 \qquad (12)$$

Darin sind:

$x_{exc}$     ein sechstes die in die Erregeranordnung 13 eingespeiste Erregungsenergie repräsentierendes Meßsignal und
$K_5, K_6$     ein konstanter fünfter bzw. sechster Parameter.

Das Meßsignal $x_\zeta$ ist nach Gln.(11) und (12) ausschließlich von Bestimmungsgrößen abhängig, die im Betrieb von Coriolis-Massedurchfluß-/Dichtemessern auftreten, nämlich vom Meßwert $X_\rho$ und vom die Erregungsenergie repräsentierenden Meßsignal $X_{exc}$.

Nach einer Ausgestaltung der Erfindung gemäß Gl.(12) umfaßt das Meßmittel 144 eine sechste Teilschaltung 26, die in Fig. 7 nach Art eines Blockschaltbildes dargestellt ist.

Die Teilschaltung 26 weist einen vierten Subtrahierer 261 mit einem Minuend-Eingang für das die Erregungsenergie repräsentierende Meßsignal $x_{exc}$ und mit einem Subtrahend-Eingang für den Parameter $K_6$ auf. Ein durch den Subtrahierer 261 gebildeter vierter Differenz-Wert für $x_{exc}-K_6$ wird an einen Signal-Eingang eines ersten Potenzierers 262 gelegt. An einem Exponent-Eingang liegt der Wert zwei, so daß der Potenzierer 262 den vierten Differenz-Wert in einen ersten Potenz-Wert für $(x_{exc}-K_6)^2$ überführt. Der Potenz-Wert wiederum wird einem ersten Eingang eines achten Multiplizierers 263 zugeführt, der aus diesem und aus dem an einem zweiten Eingang liegenden Parameter $K_5$ einen achten Produkt-Wert für

$K_5(x_{exc}-K_6)^2$ bildet, der dem Meßsignal $x_\zeta$ entspricht.

Das die Erregungsenergie repräsentierende Meßsignal $X_{exc}$ wird mittels Strom- und/oder Spannungsmessung bzw. mittels Impedanzmessung an der Erregeranordnung gebildet. Bei der beschriebenen Erregeranordnung 13 in Form einer Tauchanker-Spulenanordnung wandelt nach einer Ausgestaltung der Erfindung ein Spannungs-Strom-Wandler eine an die Spule gelegte Erreger-Spannung in einen dazu proportionalen Strom um, von dem wiederum mittels eines nachgeschalteten Effektivwert-Bildners ein Effektivwert abgeleitet wird. Dieser ist dann das die Erregungsenergie repräsentierende Meßsignal $x_{exc}$.

Anstelle der Messung der Errergerenergie besteht eine weitere Möglichkeit zur Bestimmung der kinematischen Viskosität des Mediums darin, eine Druckdifferenz über einer geeigneten Meßstrecke entlang der Rohrleitung oder entlang des Meßrohrs 11 zu messen und entsprechend auszuwerten.

Für die kinematische Viskosität gilt nämlich bei überwiegend laminarer Strömung in der Meßstrecke:

$$\zeta = \frac{2\pi \cdot D^4}{L} \cdot \left(\frac{dQ}{dt}\right)^{-1} \cdot \Delta p \qquad (13)$$

und bei überwiegend turbulenter Strömung:

$$\nu = 0{,}3^{-4} \cdot \frac{D^{19}}{L^4} \cdot \rho^3 \cdot \left(\frac{dQ}{dt}\right)^{-7} \cdot \left(\Delta p\right)^4 . \qquad (14)$$

Darin bedeuten:

L     die Länge der Meßstrecke und
$\Delta p$     die Druckdifferenz über der Rohrleitungs-Meßstrecke.

Gl.(13) beruht auf dem bekannten Hagen-Poiseuille Gesetz, während Gl.(14) empirisch ermittelt ist. Beide Gleichungen sind bezüglich der Druckdifferenz monoton wachsende Funktionen, die einen einzigen gemeinsamen Schnittpunkt aufweisen.

Nach einer weiteren Ausgestaltung der Erfindung werden daher zur Ermittlung des Meßsignals $x_\zeta$ folgende, sich durch Einsetzen der entsprechenden Meßsignale in die Gln.(13) und (14) ergebende Beziehungen verwendet:

$$x_\zeta = \begin{cases} X_{\zeta 1} = K_7 \cdot \dfrac{x_{\Delta p}}{X^{\cdot}{}_m} & \text{für} \quad X_{\zeta 1} < X_{\zeta 2} \\[4mm] X_{\zeta 2} = K_8 \cdot \dfrac{\left(x_{\Delta p}\right)^4}{\left(X^{\cdot}{}_m\right)^7} \cdot \left(X_\rho\right)^3 & \text{für} \quad X_{\zeta 2} \le X_{\zeta 1} \end{cases} \qquad (15)$$

Darin sind:

$X_{\zeta 1}$      ein die kinematische Viskosität des Mediums bei laminarer Strömung repräsentierender Meßwert,

$X_{\zeta 2}$      ein die kinematische Viskosität des Mediums bei turbulenter Strömung repräsentierender Meßwert,

$x_{\Delta p}$      ein die Druckdifferenz repräsentierendes siebentes Meßsignal,

$K_7$      ein aus dem Quotienten $2\pi D^4/L$ gemäß Gl.(13) abgeleiteter siebenter Parameter und

$K_8$      ein aus dem Quotienten $0{,}3^{-4} \cdot D^{19}/L^4$ gemäß Gl.(14) abgeleiteter achter Parameter.

Der dann tatsächlich gültige Wert für das Meßsignal $x_\eta$ ist nach Gl.(15) immer genau der kleinere der beiden ermittelten Meßwerte $X_{\zeta 1}$ für laminare bzw. $X_{\zeta 2}$ für turbulente Strömung.

Das Meßsignal $x_\zeta$ ist nach Gl. (15) von Bestimmungsgrößen abhängig, die im Betrieb von Coriolis-Massedurchfluß-/ Dichtemessern auftreten, nämlich vom Zwischenwert $X^*_m$ und vom Meßwert $X_\rho$. Außerdem hängt das Meßsignal $x_\zeta$ von einer weiteren Bestimmungsgröße ab, nämlich vom die Druckdifferenz repräsentierenden Meßsignal $x_{\Delta p}$, die im Betrieb ermittelt wird.

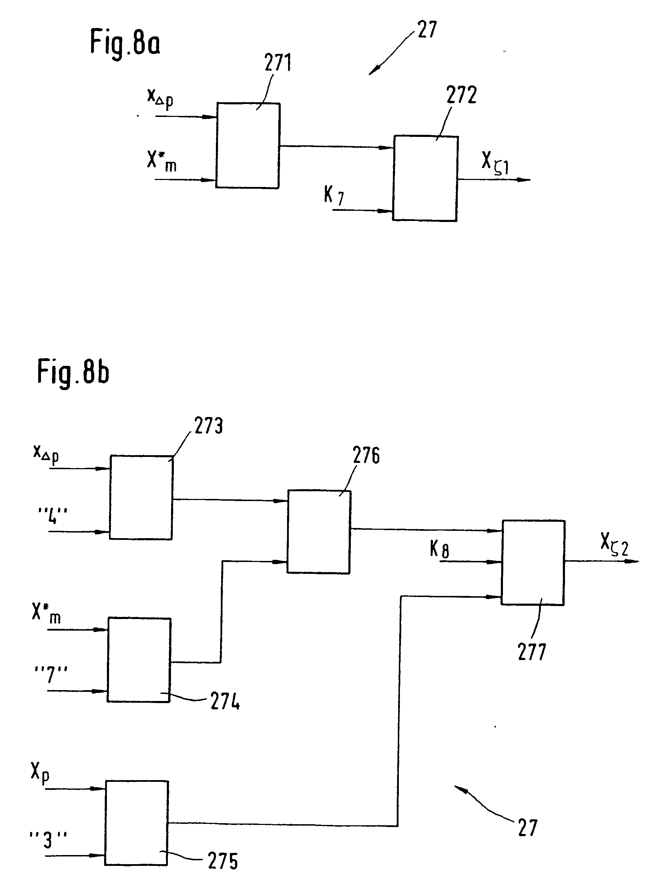

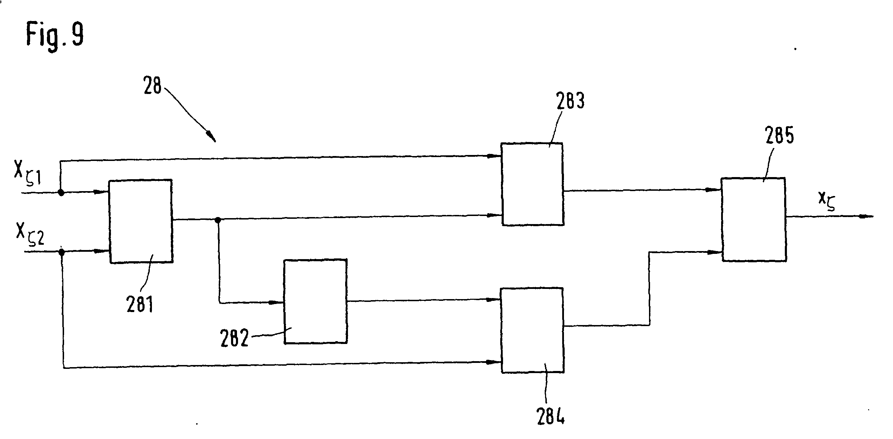

Gemäß einer Ausgestaltung der Erfindung umfaßt entsprechend Fig. 8a und Fig. 8b das Meßmittel 144 eine siebente Teilschaltung 27 und entsprechend Fig. 9 eine achte Teilschaltung 28 zur Realisierung von Gl.(15)

Die Teilschaltung 27 dient der Generierung der beiden die Viskosität des Mediums repräsentierenden Meßwerte $X_{\zeta 1}$, $X_{\zeta 2}$. Dementsprechend weist sie einen dritten Dividierer 271 mit einem Dividend-Eingang für das Meßsignal $x_{\Delta p}$ und mit einem Divisor-Eingang für den Zwischenwert $X^*_m$ auf. Der Dividierer 271 erzeugt einen dritten Quotient-Wert für $x_{\Delta p}/X^*_m$, der einem ersten Eingang eines neunten Multiplizierers 272 zugeführt ist. An einen zweiten Eingang des Multiplizierers 272 ist der Parameter $K_7$ angelegt, so daß der Multiplizierer 272 einen neunten Produkt-Wert für $K_7 x_{\Delta p}/X^*_m$ liefert, der dem die kinematische Viskosität des Mediums bei laminarer Strömung repräsentierenden Meßwert $X_{\zeta 1}$ entspricht.

Des weiteren umfaßt die Teilschaltung 27 einen zweiten Potenzierer 273 mit einem Signal-Eingang für das Meßsignal $x_{\Delta p}$ und mit einem Exponent-Eingang für den Wert vier. Der Potenzierer 273 liefert einen zweiten Potenz-Wert für $(x_{\Delta p})^4$ und führt diesen einem Dividend-Eingang eines vierten Dividierers 276 zu.

Ferner umfaßt die Teilschaltung 27 einen dritten Potenzierer 274 mit einem Signal-Eingang für den Zwischen-wert $X^*_m$ und mit einem Exponent-Eingang für den Wert sieben. Der Potenzierer 274 liefert einen dritten Potenz-Wert für $(X^*_m)^7$. Ein vierten Potenzierer 275 mit einem Signal-Eingang für den Zwischenwert $X_\rho$ und mit einem Exponent-Eingang für den Wert drei liefert einen vierten Potenz-Wert für $(X_\rho)^3$.

Der dritte Potenz-Wert ist einem Divisor-Eingang des vierte Dividierers 276 zugeführt, während der vierte Potenz-Wert an einem ersten Eingang eines zehnten Multiplizierers 277 liegt. Ferner weist der Multiplizierer 277 einen zweiten Eingang für den Parameter $K_8$ und einen dritten Eingang für einen vom Dividierer 276 erzeugten vierten Quotient-Wert für $(x_{\Delta p})^4/(X^*_m)^7$ auf. Der Multiplizierer 277 liefert somit einen zehnten Produkt-Wert für $K_8 \cdot (X_\rho)^3 \cdot (x_{\Delta p})^4/(X^*_m)^7$, der dem die kinematische Viskosität des Mediums bei turbulenter Strömung repräsentierenden Meßwert $X_{\zeta 2}$ entspricht.

Die achte Teilschaltung 28 entsprechend Fig. 9 dient der Realisierung der beiden Ungleichungen gemäß Gl. (15). Die Teilschaltung 28 umfaßt einen dritten Komparator 281 mit einem ersten Eingang für den neunten Produkt-Wert und mit einem zweiten Eingang für den zehnten Produkt-Wert. Der Komparator 281 erzeugt einen fünften Vergleichs-Wert für $K_7 x_{\Delta p}/X^*_m < K_8 X_\rho (x_{\Delta p})^4/(X^*_m)^7$, der gleich eins ist, wenn der neunte Produkt-Wert kleiner als der zehnte Produkt-Wert ist; anderenfalls ist der fünfte Vergleichs-Wert gleich null.

Der fünfte Vergleichs-Wert ist einem zweiten Inverter 282 zugeführt und liegt außerdem an einem ersten Eingang eines elften Multiplizierers 283. An einem zweiten Eingang des Multiplizierers 283 liegt der neunte Produkt-Wert, so daß der Multiplizierer 283 einen elften Produkt-Wert liefert, der gleich dem neunten Produkt-Wert ist, wenn der fünfte Vergleichs-Wert gleich eins ist, oder der gleich null ist, wenn der fünfte Vergleichs-Wert null ist.

Der Inverter 282 liefert einen sechsten Vergleichs-Wert, der zum fünften Vergleichs-Wert invertiert ist und der einem ersten Eingang eines zwölften Multiplizierers 284 zugeführt ist. An einem zweiten Eingang des Multiplizierers 284 liegt der zehnte Produkt-Wert, so daß der Multiplizierer 284 einen zwölften Produkt-Wert liefert, der gleich dem zehnten Produkt-Wert ist, wenn der sechste Vergleichs-Wert gleich eins ist, oder der gleich null ist, wenn der sechste Vergleichs-Wert null ist.

Der elfte Produkt-Wert ist einem ersten Eingang eines vierten Addierers 285 und der zwölfte Produkt-Wert einem zweiten Eingang des Addierers 285 zugeführt. Da gleichzeitig immer nur einer der beiden Produkt-Werte ungleich null ist, ist ein vom Addierer 285 gelieferter vierter Summen-Wert gleich dem Meßsignal $x_\zeta$.

Ein möglicher Unterschied zwischen der nach Gl.(15) ermittelten und der im Meßrohr 11 tatsächlich vorhandenen kinematischen Viskosität, der z.B. auf den Einfluß von Temperaturunterschieden im Medium zurückzuführen ist, läßt sich durch entsprechende Temperaturmessungen ohne weiteres kompensieren.

Die Teilschaltungen 21, 22, 23, 24, 25, 26, 27 und 28 sind als analoge Rechenschaltungen vorausgesetzt, können jedoch mindestens teilweise als digitale Rechenschaltungen mit diskreten Komponenten oder mit einem Mikroprozessor realisiert sein.

Im Falle, daß der Betrieb der praktisch parallel arbeitenden Teilschaltungen 22...28 zeitunkritisch ist, können gleichartige Funktionen wie addieren, subtrahieren, multiplizieren, dividieren bzw. potenzieren ggf. mittels Multiplexern bzw. Demultiplexern derart zusammengefaßt werden, daß diese Funktionen jeweils nur einmal in einer Teilschaltung realisiert sind und die Generierung der einzelnen errechneten Werte durch eine sequentielle Beschaltung der Eingänge mit den entsprechenden Eingangs-Werten erfolgt.

**Patentansprüche**

1. Coriolis-Massedurchflußmesser, insb. Coriolis-Massedurchfluß-/Dichtemesser, zum Messen eines Massendurchflusses eines in einer Rohrleitung strömenden Mediums, welcher Coriolis-Massedurchflußmesser umfaßt:

   - mindestens ein Meßrohr (11), das im Betrieb vom Medium durchströmt ist,
   - ein Trägermittel (12), das an einem einlaßseitigen Ende und einem auslaßseitigen Ende des Meßrohrs (11) fixiert ist und dieses somit schwingfähig einspannt,
   - eine Erregeranordnung (13), die das Meßrohr (11) im Betrieb in mechanische Schwingungen, insb. Biegeschwingungen, versetzt,
   - Mittel (141, 142) zum Erzeugen

      -- eines einlaßseitige Schwingungen des Meßrohrs (11) repräsentierenden ersten Meßsignals (xs1) und
      -- eines auslaßseitige Schwingungen des Meßrohrs (11) repräsentierenden zweiten Meßsignals (xs2), sowie

   - eine Auswerte-Elektronik (2),

      -- die einen vom ersten und vom zweiten Meßsignal ($x_{s1}$, $x_{s2}$) abgeleiteten, unkorrigierten Massedurchfluß repräsentierenden Zwischenwert ($X^*_m$) sowie einen aus der momentanen Reynolds-Zahl des Mediums abgeleiteten Korrekturwert ($X_K$) für den Zwischenwert ($X^*_m$) erzeugt, und
      -- die unter Verwendung des Zwischenwerts ($X^*_m$) und des Korrekturwerts ($X_K$) einen den Massedurchfluß repräsentierenden ersten Meßwert ($X_m$) ermittelt.

2. Coriolis-Massedurchflußmesser nach Anspruch 1, wobei die Auswerte-Elektronik (2) den Korrekturwert ($X_K$) unter Verwendung einer Viskosität des Mediums bestimmt.

3. Coriolis-Massedurchflußmesser nach dem vorherigen Anspruch, wobei die Auswerte-Elektronik (2) einen vom ersten und/oder vom zweiten Meßsignal ($x_{s1}$, $x_{s2}$) abgeleiteten, eine Dichte des Mediums repräsentierenden zweiten Meßwert ($X_\rho$) liefert, und wobei die Auswerte-Elektronik (2) den Korrekturwert ($X_K$) auch mittels des zweiten Meßwerts ($X_\rho$) bestimmt.

4. Coriolis-Massedurchflußmesser nach einem der vorherigen Ansprüche, wobei die Auswerte-Elektronik (2) den Korrekturwert ($X_K$) unter Verwendung des Zwischenwerts ($X^*_m$) ermittelt.

5. Coriolis-Massedurchflußmesser nach einem der vorherigen Ansprüche, wobei die Auswerte-Elektronik (2) die momentane Reynolds-Zahl des Mediums unter Verwendung des Zwischenwerts ($X^*_m$) ermittelt.

6. Coriolis-Massedurchflußmesser nach einem der vorherigen Ansprüche, welcher Coriolis-Massedurchflußmesser Mittel (144) zum Erzeugen eines eine Viskosität des Mediums repräsentierenden dritten Meßsignals ($x_\eta$, $x_\zeta$) umfaßt, und bei welchem Coriolis-Massedurchflußmesser die Auswerte-Elektronik (2) den Korrekturwert ($X_K$) auch vom dritten Meßsignal ($x_\eta$, $x_\zeta$) ableitet.

7. Coriolis-Massedurchflußmesser nach einem der vorherigen Ansprüche, wobei die Auswerte-Elektronik (2) den ersten Meßwert ($X_m$) basierend auf der Funktionsgleichung

$$X_m = (1+X_K) \cdot X^*_m$$

ermittelt.

8. Verfahren zum Messen eines Massendurchflusses eines in einer Rohrleitung strömenden Mediums mittels eines Coriolis-Massedurchflußmessers, insb. Coriolis-Massedurchfluß-/ Dichtemessers, welches Verfahren folgende Schritte umfaßt:

- Bewirken von Schwingungen, insb. Biegeschwingungen, eines vom Medium durchströmten Meßrohrs (11) des Coriolis-Massedurchflußmessers zum Erzeugen von Corioliskräften,
- Erfassen der Schwingungen des Meßrohrs (11) und Erzeugen eines einlaßseitige Schwingungen repräsentierenden ersten Meßsignals ($x_{s1}$) und eines auslaßseitige Schwingungen repräsentierenden zweiten Meßsignals ($x_{s2}$) zum Ermitteln eines einen unkorrigierten Massedurchfluß repräsentierenden Zwischenwertes ($X^*_m$),
- Ermitteln einer momentanen Reynolds-Zahl des Mediums zum Bilden eines Korrekturwertes ($X_K$) für den Zwischenwert ($X^*_m$), sowie
- Erzeugen eines den Massedurchfluß des Mediums repräsentierenden ersten Meßwerts ($X_m$) mittels des Zwischenwertes ($X^*_m$) und mittels des Korrekturwertes ($X_k$).

9. Verfahren nach dem vorherigen Anspruch, wobei der Korrekturwert ($X_K$) unter Verwendung des Zwischenwerts ($X^*_m$) ermittelt wird.

10. Verfahren nach Anspruch 8 oder 9, weiters umfassend einen Schritt des Ermittelns einer Viskosität des Mediums zum Bilden des Korrekturwertes ($X_K$).

11. Verfahren nach dem vorherigen Anspruch, das folgende weitere Schritte umfaßt:

- Ermitteln eines eine Dichte des Mediums repräsentierenden zweiten Meßwerts ($X_\rho$) anhand der Meßsignale ($x_{s1}$, $x_{s2}$) und
- Ermitteln des Korrekturwertes ($X_k$) unter Verwendung des zweiten Meßwerts ($X_\rho$).

**Claims**

1. Coriolis mass flowmeter, particularly a Coriolis mass flow/density meter, designed to measure a mass flow of a medium flowing through a pipe, said Coriolis mass flowmeter comprising:

   - at least one measuring tube (11) through which medium flows during operation,
   - a support (12) which is fixed at an inlet-side end and an outlet-side end of the measuring tube (11), thereby clamping the pipe in a way that it can vibrate,
   - an exciter arrangement (13) which, during operation, causes the measuring tube (11) to vibrate mechanically, particularly with flexural vibrations,
   - resources (141, 142) to generate

     -- a first measuring signal (xs1) representing inlet-side vibrations of the measuring tube (11) and
     -- a second measuring signal (xs2) representing outlet-side vibrations of the measuring tube (11) and

   - an evaluation electronics system (2),

     -- which generates an intermediate value ($X^*m$) that represents the uncorrected mass flow derived from the first and second measuring signal (xs1, xs2), as well as a correction value (Xk) for the intermediate value ($X^*m$), derived from the current Reynolds number of the medium, and
     -- which determines a first measured value (Xm) that represents the mass flow using the intermediate value ($X^*m$) and the correction value (Xk).

2. Coriolis mass flowmeter as claimed in Claim 1, wherein the evaluation electronics system (2) determines the correction value (Xk) using a viscosity of the medium.

3. Coriolis mass flowmeter as claimed in the previous claim, wherein the evaluation electronics system (2) returns a second measured value (Xp) that represents a density of the medium and is derived from the first and/or the second measuring signal (xs1, xs2), and wherein the evaluation electronics system (2) also determines the correction value (Xk) using the second measured value (Xp).

4. Coriolis mass flowmeter as claimed in one of the previous claims, wherein the evaluation electronics system (2) determines the correction value (Xk) using the intermediate value (X*m).

5. Coriolis mass flowmeter as claimed in one of the previous claims, wherein the evaluation electronics system (2) determines the current Reynolds number of the medium using the intermediate value (X*m).

6. Coriolis mass flowmeter as claimed in one of the previous claims, said mass flowmeter comprising resources (144) to generate a third measuring signal (xη, xζ) that represents a viscosity of the medium and wherein the evaluation electronics system (2) also derives the correction value (Xk) from the third measuring signal (xη, x$_\zeta$).

7. Coriolis mass flowmeter as claimed in one of the previous claims, wherein the evaluation electronics system (2) determines the first measured value (Xm) based on a functional equation

$$Xm = (1+Xk) \cdot X^{\star}m.$$

8. Procedure for measuring a mass flow of a medium flowing through a pipe using a Coriolis mass flowmeter, particularly a Coriolis mass flow/density meter, said procedure comprising the following steps:

   - A measuring tube (11) - through which medium is flowing - of the Coriolis mass flowmeter is set to vibrate, particularly with flexural vibrations, to generate Coriolis forces,
   - The vibrations of the measuring tube (11) are recorded and the system generates a first measuring signal (Xs1) representing vibrations on the inlet side and a second measuring signal (Xs2) representing vibrations on the outlet side to determine an intermediate value (X*m) that represents an uncorrected mass flow
   - A current Reynolds number of the medium is determined to form a correction value (Xk) for the intermediate value (X*m), and
   - A first measured value (Xm) representing the mass flow of the medium is generated using the intermediate value (X*m) and using the correction value (Xk).

9. Procedure as claimed in the previous claim, wherein the correction value (Xk) is determined using the intermediate value (X*m).

10. Procedure as claimed in Claims 8 or 9, further comprising a step to determine a viscosity of the medium to form the correction value (Xk).

11. Procedure as claimed in the previous claim that comprises the following additional steps:

   - A second measured value (Xp), which represents a density of the medium, is determined using the measuring signals (xs1, xs2) and
   - The correction value (Xk) is determined using the second measured value (Xp).


**Revendications**

1. Débitmètre massique Coriolis, notamment débitmètre massique / densimètre Coriolis, destiné à la mesure d'un débit massique d'un produit s'écoulant dans une conduite, lequel débitmètre massique Coriolis comprend :

   - au moins un tube de mesure (11), lequel est parcouru, en fonctionnement, par le produit,
   - un dispositif support (12), lequel est fixé à une extrémité côté entrée et à une extrémité côté sortie du tube de mesure (11), et serre ainsi ce dernier de façon apte à vibrer,
   - un circuit excitateur (13) qui, en fonctionnement, fait entrer le tube de mesure (11) en vibrations mécaniques, notamment en vibrations de flexion,
   - moyens (141, 142) destinés à la génération

       -- d'un premier signal de mesure (xs1) représentant les vibrations côté entrée du tube de mesure (11) et
       -- d'un deuxième signal de mesure (xs2) représentant les vibrations côté sortie du tube de mesure (11), ainsi que

- une électronique d'exploitation (2),

-- qui génère une valeur intermédiaire (X*m) représentant le débit massique non corrigé, dérivée du premier et du deuxième signal de mesure (xs1, xs2), ainsi qu'une valeur de correction (Xk) pour la valeur intermédiaire (X*m), dérivée du nombre de Reynolds momentané du produit, et
-- qui détermine une première valeur de mesure (Xm) représentant le débit massique sur la base de la valeur intermédiaire (X*m) et de la valeur de correction (Xk).

2. Débitmètre massique Coriolis selon la revendication 1, pour lequel l'électronique d'exploitation (2) définit une valeur de correction (Xk) sur la base d'une viscosité du produit.

3. Débitmètre massique Coriolis selon la revendication précédente, pour lequel l'électronique d'exploitation (2) délivre une deuxième valeur de mesure (Xp) représentant une densité du produit, valeur qui est dérivée du premier et/ou du deuxième signal de mesure (xs1, xs2), et pour lequel l'électronique d'exploitation (2) définit la valeur de correction (Xk) également au moyen de la deuxième valeur de mesure (Xp).

4. Débitmètre massique Coriolis selon l'une des revendications précédentes, pour lequel l'électronique d'exploitation (2) détermine la valeur de correction (Xk) sur la base de la valeur intermédiaire (X*m).

5. Débitmètre massique Coriolis selon l'une des revendications précédentes, pour lequel l'électronique d'exploitation (2) détermine le nombre de Reynolds momentané du produit sur la base de la valeur intermédiaire (X*m).

6. Débitmètre massique Coriolis selon l'une des revendications précédentes, lequel débitmètre massique Coriolis comprend des moyens (144) destinés à la génération d'un troisième signal de mesure (xn, xζ) représentant une viscosité du produit, et pour lequel débitmètre massique Coriolis l'électronique d'exploitation (2) dérive la valeur de correction (Xk) également du troisième signal de mesure (xη, xζ).

7. Débitmètre massique Coriolis selon l'une des revendications précédentes, pour lequel l'électronique d'exploitation (2) détermine la première valeur de mesure (Xm) sur la base de l'équation fonctionnelle

$$Xm = (1+Xk) \cdot X^{*}m.$$

8. Procédé destiné à la mesure d'un débit massique d'un produit s'écoulant dans une conduite au moyen d'un débitmètre massique Coriolis, notamment un débitmètre massique / densimètre Coriolis, lequel procédé comprend les étapes suivantes :

- Entrée en vibrations, notamment de vibrations de flexion, d'un tube de mesure (11), parcouru par le produit, du débitmètre massique Coriolis destiné à la génération de forces de Coriolis,
- Saisie des vibrations du tube de mesure (11) et génération d'un premier signal de mesure (Xs1) représentant les vibrations côté entrée et d'un deuxième signal de mesure (Xs2) représentant les vibrations côté sortie,
- Détermination d'un nombre de Reynolds momentané du produit destiné à la formation d'une valeur de correction (Xk) pour la valeur intermédiaire (X*m), ainsi que
- Génération, au moyen de la valeur intermédiaire (X*m) et au moyen de la valeur de correction (Xk), d'une première valeur de mesure (Xm) représentant le débit massique du produit.

9. Procédé selon la revendication précédente, pour lequel la valeur de correction (Xk) est déterminée sur la base de la valeur intermédiaire (X*m).

10. Procédé selon la revendication 8 ou 9, comprenant en outre une étape de détermination d'une viscosité du produit destinée à former la valeur de correction (Xk).

11. Procédé selon la revendication précédente, qui comprend les étapes supplémentaires suivantes :

- Détermination sur la base des signaux de mesure (xs1, xs2) d'une deuxième valeur de mesure (Xp) représentant une densité du produit et
- Détermination de la valeur de correction (Xk) sur la base de la deuxième valeur de mesure (Xp).

Fig.1

EP 1 281 938 B1

Fig.2

EP 1 281 938 B1

Fig.3

Fig.4

Fig. 5

$X_K = f(x_{Re})$

EP 1 281 938 B1

## Fig.6a

## Fig.6b

## Fig.7

## Fig.8a

$x_{\Delta p}$

$X^*_m$

271

27

272

$K_7$

$X_{\zeta 1}$

## Fig.8b

$x_{\Delta p}$

273

276

"4"

$X^*_m$

"7"

274

$K_8$

$X_{\zeta 2}$

277

$X_p$

"3"

275

27

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4187721 A
- US 5736653 A
- US 4660421 A
- US 4733569 A
- US 4876879 A
- US 4768389 A
- DE 3505166 A
- US 4491025 A
- US 5218873 A
- US 4801897 A
- US 4949583 A
- US 5648616 A
- US 4768384 A